# FASCICULE DE BREVET EUROPEEN

(11) **EP 2 674 651 B1**
(45) Date de publication et mention de la délivrance du brevet: **08.04.2015**
(21) Numéro de dépôt: 13290126.5
(22) Date de dépôt: 06.06.2013
(51) Int. Cl.: F16K 21/12

(54) **Robinet mitigeur temporisé avec une durée d'écoulement modulable.**
Zeitgeschaltete Mischbatterie mit einer modulierbaren Fließzeit
Delayed mixing valve with adjustable flow duration.

(30) Priorité: 11.06.2012 FR 1201667
(43) Date de publication de la demande: 18.12.2013
(73) Titulaire: Delabie, 80130 Friville Escarbotin (FR)
(72) Inventeur: Normand, Marcel, 80820 Arrest (FR)
(74) Mandataire: Hammond, William

(56) Documents cités:
- EP-A2- 1 967 776
- FR-A1- 2 434 980
- FR-A1- 2 626 056
- FR-A1- 2 683 606
- US-A- 3 902 521

## Description

La présente invention est relative à un robinet mitigeur temporisé avec une durée d'écoulement modulable.

Des robinets mitigeurs temporisés sont notamment décrits dans les documents suivants FR-2 434 980-A, FR-2 626 056-A ou FR-2 683 606-A.

Mais ces robinets de l'art antérieur ont pour inconvénient de ne pas permettre un réglage de la temporisation, ou un réglage du débit, ou encore une commande d'ouverture sans effort.

Aussi un des buts de la présente invention est-il de fournir un robinet mitigeur temporisé qui permet d'obvier les inconvénients rappelés ci-dessus.

Un autre but de l'invention est de fournir un tel robinet qui permet aussi de limiter la stagnation de l'eau dans le robinet et de faciliter le détartrage.

Ces buts ainsi que d'autres qui apparaîtront par la suite, sont atteints par un robinet mitigeur temporisé avec durée d'écoulement modulable dont le mécanisme monobloc comprend un bouton de commande rendu solidaire d'une tige de commande creuse laquelle coulisse axialement dans un corps de tête rendu solidaire du corps du mitigeur, de façon connue un ressort de compression étant disposé entre le bouton de commande et le corps de tête de façon à opérer un rappel automatique de l'ensemble bouton de commande et tige de commande dès que cesse l'appui d'un utilisateur sur ce bouton de commande, le corps de tête recevant, dans sa partie inférieure, un entraîneur disposé de façon concentrique avec ce corps de tête, l'extrémité inférieure de cet entraîneur étant un siège auxiliaire du mécanisme, et l'extrémité inférieure de la tige de commande recevant une vis porte-clapet auxiliaire, un premier joint d'étanchéité porté par cette vis porte clapet auxiliaire faisant office de clapet auxiliaire et venant en contact avec le siège auxiliaire lorsque le bouton de commande est relâché par un utilisateur, l'entraîneur étant prolongé par une chemise qui coopère avec lui par un système de crabots, un joint d'étanchéité étant disposé entre cet entraîneur et la chemise de façon à maintenir étanche la partie supérieure de cette chemise formant chambre de temporisation dans laquelle coulisse de façon connue un piston portant un joint à lèvre et le clapet principal du robinet, un ressort de rappel étant disposé entre le piston et l'entraîneur de manière à ramener le piston vers le siège principal lorsque le clapet auxiliaire est fermé, lequel robinet est caractérisé, selon la présente invention par le fait qu'une tige axiale est disposée dans le porte clapet auxiliaire, cette tige axiale coopérant, avec une vis de réglage (de temporisation) disposée dans la partie supérieure de la tige de commande creuse, l'autre extrémité de la tige axiale venant en contact avec la partie supérieure du piston lorsque le clapet auxiliaire est ouvert ce qui limite la course du piston. Lorsqu'on visse la vis de réglage, on réduit la course du piston ce qui a pour effet de réduire la temporisation et vice versa.

De préférence, une butée antifriction est intercalée entre le corps de tête et l'entraîneur, qui comporte axialement un crantage femelle coopérant avec un crantage mâle situé dans la partie inférieure de la tige de commande.

De préférence, l'entraîneur comporte une chambre intérieure de décompression qui communique, d'une part, avec la chambre de temporisation par le crantage femelle et le siège auxiliaire, et, d'autre part, avec l'extérieur du mécanisme monobloc par un canal radial situé à la périphérie de l'entraîneur.

Avantageusement, un trou axial est ménagé dans le bouton de commande pour permettre le passage d'un outil jusqu'à la vis de réglage de temporisation.

De préférence, l'extrémité inférieure de la chemise comporte une ouverture en forme de croissant qui coopère avec deux orifices l'un pour l'eau chaude, l'autre pour l'eau froide, cette ouverture en forme de croissant communiquant par un canal vertical avec l'intérieur de la chemise formant chambre de mélange.

Avantageusement, la chambre de mélange contient le siège principal du robinet, ce dit siège principal étant porté par un tube qui fait partie intégrante de la chemise, et la partie interne de ce tube communiquant vers l'extérieur de la chemise par un canal radial.

De préférence, les orifices eau chaude et eau froide sont ménagés dans des sièges poussés par des ressorts.

Avantageusement, les deux sièges eau chaude et eau froide sont disposés de manière indépendante dans une double tubulure en forme de jumelles dont les extrémités inférieures pénètrent de façon étanche dans la base du corps du robinet, et la partie supérieure de cette double tubulure en forme de tambour coopère de façon étanche joint avec une cloison intermédiaire du corps du robinet mitigeur.

La description qui va suivre et qui ne présente aucun caractère limitatif, doit être lue en regard des figures annexées, parmi lesquelles :

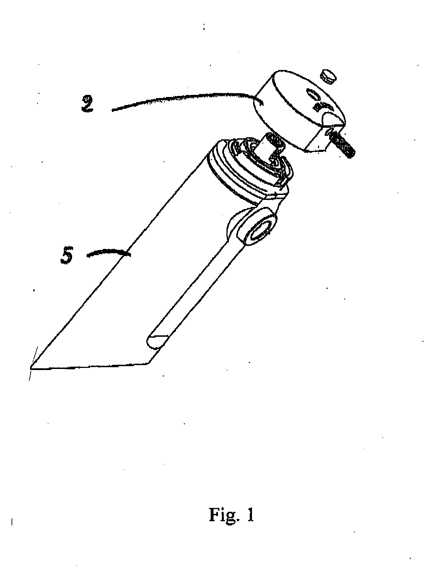

- la figure 1 représente en perspective et avec éclatement partiel un robinet mitigeur temporisé selon la présente invention ; et,

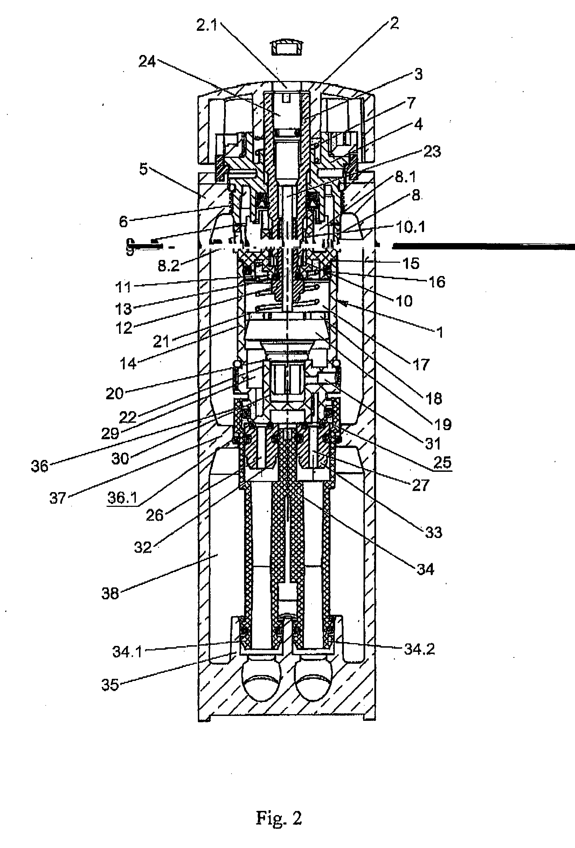

- la figure 2 est une vue en coupe verticale du robinet selon la figure 1.

Ainsi qu'on peut le voir sur ces figures, un robinet mitigeur temporisé selon la présente invention comprend un mécanisme monobloc, désigné dans son ensemble par la référence 1, disposé de façon connue dans un corps 5.

Ce mécanisme monobloc 1 comprend un bouton de commande 2 rendu solidaire d'une tige de commande 3, qui coulisse axialement dans un corps de tête 4 rendu solidaire du corps 5 par un filetage 6 qui est ménagé à la partie supérieure de ce corps 5.

En outre, ce mécanisme monobloc 1 comprend un ressort de compression 7 qui est disposé entre le bouton de commande 2 et le corps de tête 4, autour de la tige de commande 3 : ceci permet de réaliser un rappel automatique de l'ensemble constitué par le bouton de commande 2 et la tige de commande 3 dès que cesse l'appui d'un utilisateur sur ce bouton de commande 2.

Selon la présente invention, le corps de tête 4 reçoit, dans sa partie inférieure, un entraîneur 8 qui est disposé de façon concentrique avec le corps de tête 4, une butée antifriction 9 étant intercalée entre le corps de tête 4 et l'entraîneur 8 ; ce dernier comporte axialement un crantage femelle 10 coopérant avec un crantage mâle 10.1 situé à la partie inférieure de la tige de commande 3. De cette manière, quand l'utilisateur tourne le bouton de commande 2, il s'en suit une rotation simultanée de l'entraîneur 8. L'extrémité inférieure 11 de l'entraîneur 8 constitue un siège auxiliaire du robinet, et l'extrémité inférieure de la tige de commande 3 reçoit une vis porte-clapet auxiliaire 12. Un premier joint d'étanchéité 13, porté par la vis porte clapet auxiliaire 12, fait office de clapet auxiliaire et vient en contact avec le siège auxiliaire 11 lorsque le bouton de commande 2 est relâché par l'utilisateur.

L'entraîneur 8 est prolongé par une chemise 14 qui coopère avec lui par un système de crabots 15, un second joint d'étanchéité 16 étant disposé entre l'entraîneur 8 et la chemise 14 de façon à maintenir étanche la partie supérieure de la chemise 14, constituant une chambre de temporisation 17, de façon connue, un piston 18 portant un joint à lèvre 19 et le clapet principal 20 du robinet. Un ressort de rappel 21 est disposé entre le piston 18 et l'entraîneur 8 de manière à ramener le piston vers le siège principal 22 (qui sera décrit ci-après) lorsque le clapet auxiliaire 13 est fermé.

L'entraîneur 8 comporte une chambre intérieure 8.1 de décompression, qui communique, d'une part, avec la chambre de temporisation par le crantage femelle 10 et le siège auxiliaire 11, et, d'autre part, avec l'extérieur du mécanisme monobloc 1 par un canal radial 8.2 situé à la périphérie de l'entraîneur 8.

Une tige axiale 23 est disposée dans le porte-clapet auxiliaire 12. Elle coopère, avec une vis de réglage (de temporisation) 24 disposée dans la partie supérieure de la tige de commande creuse 3, l'autre extrémité de la tige axiale 23 venant en contact avec la partie supérieure du piston 18 lorsque le clapet auxiliaire 13 est ouvert ce qui limite la course du piston 18. Lorsqu'on visse la vis de réglage 24, on réduit la course du piston 18 ce qui a pour effet de réduire la temporisation et vice versa.

Un trou axial 2.1 est ménagé dans le bouton 2 pour permettre le passage d'un outil jusqu'à la vis de réglage de temporisation 23.

L'extrémité inférieure de la chemise 14 comporte une ouverture 25 en forme de croissant qui coopère avec deux orifices, l'un pour l'eau chaude 26, l'autre pour l'eau froide 27, et qui communique par un canal vertical 28 avec l'intérieur de la chemise formant chambre de mélange 29.

La chambre de mélange 29 contient le siège principal 22 du robinet mitigeur temporisé selon l'invention: ce siège principal étant porté par un tube 30 qui fait partie intégrante de la chemise 14, la partie interne de ce tube 30 communiquant vers l'extérieur de la chemise 14 par un canal radial 31.

De façon connue, les orifices eau chaude 26 et eau froide 27 sont ménagés dans des sièges poussés par des ressorts. Selon la présente invention, les deux sièges, eau chaude 32 et eau froide 33, sont disposés de manière indépendante dans une double tubulure 34 en forme de jumelles dont les extrémités inférieures 34.1 et 34.2 pénètrent de façon étanche dans la base 35 du corps du robinet mitigeur, et la partie supérieure 36 de cette double tubulure en forme de tambour coopère de façon étanche par un joint 36.1 avec une cloison intermédiaire 37 du corps du robinet mitigeur.

De cette façon l'espace intérieur 38 du corps de robinet mitigeur situé entre la cloison 37 et le fond 35 ne contiendra ni eau chaude ni eau froide. Cette structure permet, d'une part, de diminuer le risque de brûlure en cas de contact du corps du robinet par un utilisateur, et, d'autre part, d'améliorer considérablement la facilité de détartrage d'un tel robinet mitigeur.

## Revendications

1. Robinet mitigeur temporisé avec durée d'écoulement modulable dont le mécanisme monobloc (1) comprend un bouton de commande (2) rendu solidaire d'une tige de commande creuse (3) laquelle coulisse axialement dans un corps de tête (4) lequel est rendu solidaire du corps du mitigeur (5), de façon connue un ressort de compression (7) étant disposé entre ledit bouton de commande (2) et ledit corps de tête (4) de façon à opérer un rappel automatique de l'ensemble bouton de commande et tige de commande dès que cesse l'appui d'un utilisateur sur ledit bouton de commande, ledit corps de tête (4) recevant, dans sa partie inférieure, un entraîneur (8) disposé de façon concentrique avec ledit corps de tête (4), l'extrémité inférieure (11) dudit entraîneur (8) étant un siège auxiliaire du mécanisme, et l'extrémité inférieure de la tige de commande (3) recevant une vis porte-clapet auxiliaire(12), un premier joint d'étanchéité (13) porté par ladite vis porte clapet auxiliaire (12) faisant office de clapet auxiliaire et venant en contact avec ledit siège auxiliaire (11) lorsque ledit bouton de commande (2) est relâché par l'utilisateur, l'entraîneur étant prolongé par une chemise (14) qui coopère avec ce dit entraîneur (8) par un système de crabots (15), un joint d'étanchéité étant disposé entre ledit entraîneur (8) et la chemise (14) de façon à maintenir étanche la partie supérieure de ladite chemise formant chambre de temporisation (17) dans laquelle coulisse de façon connue un piston (18) portant un joint à lèvre (19) et le clapet principal (20) du robinet, un ressort de rappel (21) étant disposé entre ledit piston (18) et ledit entraîneur (8) de manière à ramener ledit piston (18) vers le siège principal (22) lorsque le clapet auxiliaire (13) est fermé, **caractérisé par le fait qu'**une tige axiale (23) est disposée dans le porte clapet auxiliaire (12), ladite tige axiale (23) coopérant, avec une vis de réglage de temporisation (24) disposée dans la partie supérieure de la tige de commande creuse (3), l'autre extrémité de la tige axiale (23) venant en contact avec la partie supérieure du piston (18) lorsque le clapet auxiliaire (13) est ouvert ce qui limite la course du piston (18).

2. Robinet mitigeur selon la revendication 1, **caractérisée par le fait qu'**une butée antifriction (9) est intercalée entre le corps de tête (4) et l'entraîneur (8), qui comporte axialement un crantage femelle (10) coopérant avec un crantage mâle (10.1) situé dans la partie inférieure de la tige de commande (3).

3. Robinet selon la revendication 2, **caractérisé par le fait que** l'entraîneur (8) comporte une chambre intérieure (8.1) de décompression qui communique, d'une part, avec la chambre de temporisation (17) par le crantage femelle (10) et le siège auxiliaire (11), et, d'autre part, avec l'extérieur dudit mécanisme monobloc (1) par un canal radial (8.2) situé à la périphérie dudit entraîneur (8).

4. Robinet selon l'une quelconque des revendications 1 à 3, **caractérisé par le fait qu'**un trou axial (2.1) est ménagé dans le bouton (2) pour permettre le passage d'un outil jusqu'à la vis de réglage de temporisation (24).

5. Robinet selon l'une quelconque des revendications 1 à 4, **caractérisé par** le fait **que** la face inférieure de la chemise (14) comporte une ouverture (25) en forme de croissant qui coopère avec deux orifices l'un pour l'eau chaude (26), l'autre pour l'eau froide (27), ladite ouverture en forme de croissant (25) communiquant par un canal vertical (28) avec l'intérieur de ladite chemise formant chambre de mélange (29).

6. Robinet selon la revendication 5, **caractérisé par le fait que** la chambre de mélange (29) contient le siège principal (22) dudit robinet, ledit siège principal étant porté par un tube (30) qui fait partie intégrante de la chemise (14), la partie interne de ce tube (30) communiquant vers l'extérieur de la chemise (14) par un canal radial (31).

7. Robinet selon la revendication 5, **caractérisé par le fait que** les orifices eau chaude (26) et eau froide (27) sont ménagés dans des sièges poussés par des ressorts.

8. Robinet selon la revendication 7, **caractérisé par le fait que** les deux sièges eau chaude (32) et eau froide (33) sont disposés de manière indépendante dans une double tubulure (34) en forme de jumelles dont les extrémités inférieures (34.1 et 34.2) pénètrent de façon étanche dans la base (35) du corps dudit robinet (5), et la partie supérieure (36) de cette double tubulure en forme de tambour coopère de façon étanche joint (36.1) avec une cloison intermédiaire (37) du corps du robinet (5).

## Patentansprüche

1. Zeitgeschaltete Mischbatterie mit einer modulierbaren Fließzeit, deren einteiliger Mechanismus (1) einen Betätigungsknopf (2) hat, der mit einem hohlen Betätigungsschaft (3) fest verbunden ist, der axial in einem Kopfkörper (4) gleitet, der mit dem Mischkörper (5) fest verbunden ist, wobei in bekannter Weise eine Kompressionsfeder (7) zwischen dem Betätigungsknopf (2) und dem Kopfkörper (4) derart angeordnet ist, dass eine automatische Rückstellung der Einheit aus Betätigungsknopf und Betätigungsschaft erfolgt, sobald die Betätigung des Betätigungsknopfs durch einen Benutzer endet, wobei der Kopfkörper (4) in seinem unteren Bereich einen Mitnehmer (8) aufnimmt, der konzentrisch zu dem Kopfkörper (4) angeordnet ist, wobei das untere Ende (11) des Mitnehmers (8) ein Hilfssitz des Mechanismus ist und das untere Ende des Betätigungsschafts (3) eine Hilfsventilträgerschraube (12) aufnimmt, wobei eine durch die Hilfsventilträgerschraube (12) getragene erste Dichtung als Hilfsventil dient und sich an den Hilfssitz (11) anlegt, wenn der Betätigungsknopf (2) von dem Benutzer losgelassen wird, wobei der Mitnehmer durch eine Schürze (14) verlängert ist, die durch ein Klauensystem (15) mit dem Mitnehmer (8) zusammenwirkt, wobei zwischen dem Mitnehmer (8) und der Schürze (14) eine Dichtung derart angeordnet ist, dass der obere Bereich der Schürze abgedichtet bleibt, wobei eine Zeitschaltkammer (17) gebildet wird, in der ein Kolben (18), der eine Dichtungslippe (19) und das Hauptventil (20) der Mischbatterie trägt, in bekannter Weise gleitet, wobei eine Rückstellfeder (21) zwischen dem Kolben (18) und dem Mitnehmer (8) derart angeordnet ist, dass der Kolben (18) in Richtung auf den Hauptsitz (22) zurückgestellt wird, wenn das Hilfsventil (13) geschlossen wird, **dadurch gekennzeichnet, dass** ein axialer Schaft (23) in dem Hilfsventilträger (12) angeordnet ist, wobei der axiale Schaft (23) mit einer Schraube (24) zum Einstellen der Zeitschaltung zusammenwirkt, die in dem oberen Bereich des hohlen Betätigungsschafts (3) angeordnet ist, wobei das andere Ende des axialen Schafts (23) mit dem oberen Bereich des Kolbens (18) in Kontakt gelangt, wenn das Hilfsventil (13) offen ist, wodurch der Hub des Kolbens (18) begrenzt wird.

2. Mischbatterie nach Anspruch 1, **dadurch gekennzeichnet, dass** zwischen den Kopfkörper (4) und den Mitnehmer (8) ein Antifriktionsanschlag (9) geschaltet ist, der axial eine aufnehmende Raste (10) aufweist, die mit einer eingreifenden Raste (10.1) zusammenwirkt, die sich in dem unteren Bereich des Betätigungsschafts (3) befindet.

3. Mischbatterie nach Anspruch 2, **dadurch gekennzeichnet, dass** der Mitnehmer (8) eine untere Dekompressionskammer (8.1) aufweist, die einerseits über die aufnehmende Raste (10) und den Hilfssitz (11) mit der Zeitschaltkammer (17) und andererseits durch einen radialen Kanal (8.2) an der Peripherie des Mitnehmers (8) mit der Außenseite des einteiligen Mechanismus (1) in Verbindung steht.

4. Mischbatterie nach einem der Ansprüche 1 bis 3, **dadurch gekennzeichnet, dass** in dem Knopf (2) eine axiale Öffnung (2.1) vorgesehen ist, die das Einführen eines Werkzeugs bis zur Schraube (24) für die Einstellung der Zeitschaltung erlaubt.

5. Mischbatterie nach einem der Ansprüche 1 bis 4, **dadurch gekennzeichnet, dass** die Unterfläche der Schürze (14) eine sichelförmige Öffnung (25) aufweist, die mit zwei Öffnungen zusammen wirkt, die eine (26) für Warmwasser und die andere (27) für Kaltwasser, wobei die sichelförmige Öffnung (25) über einen vertikalen Kanal (28) mit dem eine Mischkammer (29) bildenden Inneren der Schürze in Verbindung steht.

6. Mischbatterie nach Anspruch 5, **dadurch gekennzeichnet, dass** die Mischkammer (29) den Hauptsitz (22) der Mischbatterie enthält, wobei der Hauptsitz durch ein Rohr (30) getragen wird, das integraler Bestandteil der Schürze (14) ist, wobei der Innenbereich des Rohres (30) über einen radialen Kanal (31) mit der Außenseite der Schürze (14) in Verbindung steht.

7. Mischbatterie nach Anspruch 5, **dadurch gekennzeichnet, dass** die Warmwasseröffnung (26) und Kaltwasseröffnung (27) in federbeaufschlagten Sitzen gebildet sind.

8. Mischbatterie nach Anspruch 7, **dadurch gekennzeichnet, dass** die beiden Sitze für Warmwasser (32) und Kaltwasser (33) unabhängig voneinander in einem Doppelstutzen (34) in Form von Zwillingen angeordnet sind, deren untere Enden (34.1 und 34.2) die Basis (35) des Körpers der Mischbatterie (5) abgedichtet durchgreifen, während der obere Bereich (36) des Doppelstutzens in Form einer Trommel abgedichtet (36.1) mit einer Zwischenwand (37) des Körpers der Mischbatterie (5) zusammenwirkt.

## Claims

1. A delayed mixer tap with adjustable flow duration, the one-piece mechanism (1) of which includes a control button (2) made integral with a hollow control rod (3) which slides axially in a head body (4) which is made integral with the body of the mixer (5), in a known manner a compression spring (7) being disposed between the said control button (2) and the said head body (4) so as to operate an automatic return of the control button and control rod assembly as soon as soon as a user stops pressing on the said control button, the said head body (4) receiving, in its lower part, a driving element (8) disposed concentrically with the said head body (4), the lower end (11) of the said driving element (8) being an auxiliary seat of the mechanism, and the lower end of the control rod (3) receiving an auxiliary valve carrier screw (12), a first tightness joint (13) carried by the said auxiliary valve carrier screw (12) acting as auxiliary valve and coming in contact with the said auxiliary seat (11) when the said control button (2) is released by the user, the driving element being extended by a sleeve (14) which cooperates with the said driving element (8) by a system of dogs (15), a tightness joint being disposed between the said driving element (8) and the sleeve (14) so as to keep tight the upper part of the said sleeve forming a delay chamber (17) in which slides in a known manner a piston (18) carrying a lip seal (19) and the main valve (20) of the tap, a return spring (21) being disposed between the said piston (18) and the said driving member (8) so as to return the said piston (18) towards the main seat (22) when the auxiliary valve (13) is closed, **characterised in that** an axial rod (23) is disposed in the auxiliary valve carrier (12), the said axial rod (23) cooperating with a delay adjustment screw (24) disposed in the upper part of the hollow control rod (3), the other end of the axial rod (23) coming in contact with the upper part of the piston (18) when the auxiliary valve (13) is open, which limits the stroke of the piston (18).

2. A mixer tap according to Claim 1, **characterised in that** an anti-friction stop (9) is intercalated between the head body (4) and the driving element (8), which comprises axially a female serration (10) cooperating with a male serration (10.1) situated in the lower part of the control rod (3).

3. A tap according to Claim 2, **characterised in that** the driving element (8) comprises an interior decompression chamber (8.1) which communicates, on the one hand, with the delay chamber (17) by the female serration (10) and the auxiliary set (11), and, on the other hand, with the exterior of the said one-piece mechanism (1) by a radial duct (8.2) situated at the periphery of the said driving element (8).

4. A tap according to any one of Claims 1 to 3, **characterised in that** an axial hole (2.1) is arranged in the button (2) to permit the passage of a tool up to the delay adjustment screw (24).

5. A tap according to any one of Claims 1 to 4, **characterised in that** the lower face of the sleeve (14) comprises a crescent-shaped opening (25) which cooperates with two orifices, one for the hot water (26), the other for the cold water (27), the said crescent-shaped opening (25) communicating by a vertical duct (28) with the interior of the said sleeve forming a mixing chamber (29).

6. A tap according to Claim 5, **characterised in that** the mixing chamber (29) contains the main seat (22) of the said tap, the said main seat being carried by a tube (30) which forms an integrating part of the sleeve (14), the internal part of this tube (30) communicating toward the exterior of the sleeve (14) by a radial duct (31).

7. A tap according to Claim 5, **characterised in that** the orifices for hot water (26) and cold water (27) are arranged in seats pushed by springs.

8. A tap according to Claim 7, **characterised in that** the two seats for hot water (32) and cold water (33) are disposed independently in a double tubing (34) in twinned form, the lower ends (34.1 and 34.2) of which penetrate in a tight manner in the base (35) of the body of the said tap (5), and the upper part (36) of this double tubing in the shape of a drum cooperates in a tightly sealed manner (36.1) with an intermediate partition (37) of the body of the tap (5).
